# EUROPEAN PATENT APPLICATION

(11) **EP 0 625 700 A1**
(43) Date of publication of application: **23.11.1994**
(21) Application number: 94303514.7
(22) Date of filing: 17.05.1994
(51) Int. Cl.: G01K 11/06, G01K 11/18, G01K 11/20

(54) **A temperature sensitive fluid indicator**

(30) Priority: 18.05.1993 GB 9310228; 21.12.1993 GB 9326087
(71) Applicant: TRIGON INDUSTRIES LIMITED, Mairangi Bay, Auckland (NZ)
(72) Inventor: Balderson, Simon Neville, Telford, Shropshire TF4 2LX (GB); Whitwood, Robert John, Stafford, Staffordshire ST16 1NS (GB)
(74) Representative: Gordon, Richard John Albert

(57) **Abstract**

A temperature sensitive fluid indicator (10) comprises an envelope (11) formed of two layers of transparent polymeric film material which are welded one to another in a matrix of welds (12) to provide an array of cells (13) each containing a temperature sensitive fluid. The fluid may be an emulsion and indicia in the form of a colour, or a word such as "VOID", or a pattern may be reverse printed on an inner surface of one of the layers so as to be visible through the cells (13) and through the other of the layers when the emulsion changes to a matrix phase.

## Description

This invention relates to a temperature sensitive fluid indicator and a method of manufacturing same.

In each of US-A-2 971 852 and US-A-4 825 447 there is disclosed a temperature sensitive fluid indicator comprising an envelope containing a fluid and the fluid includes a substance the visual characteristics of which change and are visible through the envelope when the fluid is subjected to a change of temperature beyond a predetermined temperature. In US-A-2 971 852 the fluid is an emulsion which changes in opacity when subjected to a change of temperature beyond a predetermined temperature. In US-A-4 825 447 the fluid is a liposome thermographic composition which effects a colour change when a self-quenching fluorescent dye loaded into liposomes releases into a surrounding liquid medium when subjected to a change of temperature beyond a predetermined temperature. The dye is diluted by the liquid medium and fluoresces.

Such indicators have potential for a wide range of products. They may, for example, be used to indicate whether frozen food products and emulsion based paints and inks have been subjected to temperatures outside of a predetermined range and they may be used to indicate whether security packages have been tampered with by subjecting a package or a seal of the package to a temperature lower than a predetermined temperature rendering an adhesive closure temporarily ineffective.

However, the potential is not generally satisfied because the indicators are not adapted for high volume, low cost production and for ease of manufacture of products.

According to the present invention, there is provided a temperature sensitive fluid indicator comprising an envelope containing a fluid and the fluid includes a substance the visual characteristics of which change and are visible through the envelope when the fluid is subjected to a change of temperature beyond a predetermined range characterised in that the envelope comprises a plurality of cells.

If the fluid is an emulsion, containment of the emulsion in a plurality of small cells instead of a single larger sachet restricts movement of the fluid. This is advantageous if the indicator is to be adapted for security purposes because it would be difficult by manipulation of the material of the cells to re-emulsify the fluid which had changed from an opaque emulsion phase to a clear matrix phase and revealed a warning indicator. If the fluid is an emulsion or a liposome composition, containment of the fluid in a plurality of small cells instead of a single larger sachet results in only a few cells being adversely effected by the application of localised heat when the indicator is applied to, or formed into a product, by heat sealing.

The small cell size also provides an advantage in that the envelope can be manufactured as a tape or a sheet comprising two layers of polymeric film material limited by a pattern of welds to form the cells containing the fluid and the tape or sheet may be cut to any suitable dimension with minimum loss of the fluid. The tape or sheet is more rigid, because of the cellular arrangement, than the film material and, in consequence, the tape or sheet may comprise a part of an article or the article itself may be formed from the tape or sheet.

Preferably the cell size is less than 2mm in any dimension.

Following is a description, by way of example only and with reference to the accompanying drawings, of one method of carrying the invention into effect.

In the drawings:-
Figure 1 shows plan views of four embodiments of an indicator in accordance with the present invention,
Figure 2 is a diagrammatic perspective view of a security package incorporating one of the embodiments of an indicator shown in Figure 1, the indicator being in the form of a tape and comprising a flap of the package,
Figure 3 is a diagrammatic perspective view of apparatus for manufacturing the tape,
Figure 4 is a diagrammatic cross section of infeed nip rollers of the apparatus shown in Figure 3,
Figure 5 is a diagrammatic elevation of rotary sealing rollers of the apparatus shown in Figure 3,
Figure 6 is a diagrammatic cross section of matrix seal rollers of the apparatus shown in Figure 3,
Figure 7 is a plan view of another embodiment of an indicator in accordance with the present invention before activation,
Figure 8 is the same view of the embodiment shown in Figure 7 when activated,
Figure 9 is a plan view of another embodiment of an indicator in accordance with the present invention before activation, and
Figure 10 is the same view of the embodiment shown in Figure 8 when activated.

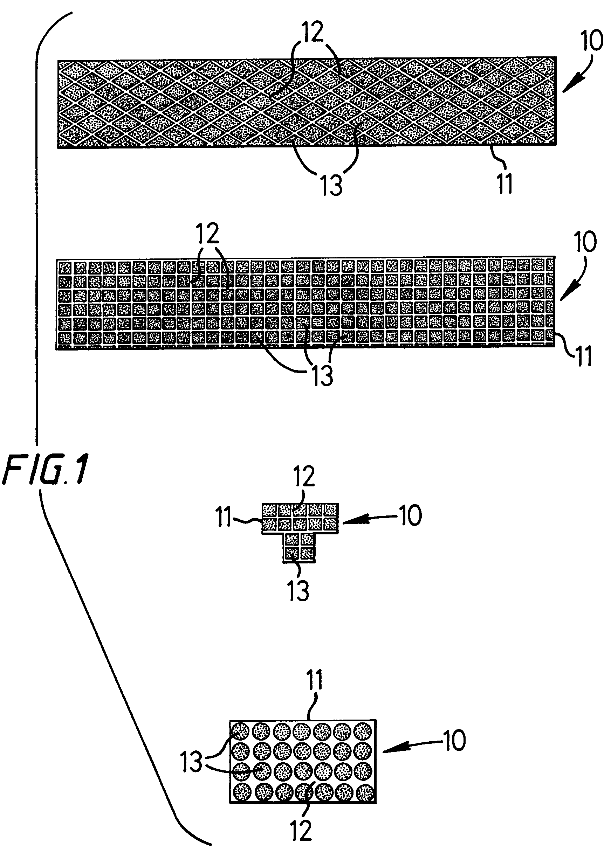

Referring now to Figure 1 of the drawings, there is shown plan views of four embodiments of an indicator 10 in accordance with the present invention each comprising an envelope 11 formed of two layers of transparent polymeric film material which are welded one to another in a matrix of welds 12 to provide an array of cells 13 each containing a temperature sensitive fluid. The fluid may be an emulsion and indicia in the form of a colour, or a word such as "VOID", or a pattern may be reverse printed on an inner surface (not shown) of one of the layers so as to be visible through the cells 13 and through the other of the layers when the emulsion changes to a matrix phase. In another configuration, the fluid may be a liposome composition comprising liposomes loaded with a quenched fluorescent dye and which are contained within a liquid medium. The medium is such that the dye, when released from the liposomes, and the medium react causing the dye to fluoresce.

The indicator 10 may be in the form of a tape and the matrix may be such that the cells 13 are of any desired configuration. In Figure 1, diamond shaped and rectangular shaped configurations are shown. The indicator 10 may be formed as an alpha-numeric character; a letter "T" is shown in Figure 1. The indicator 10 may compise a label, one such label being shown in Figure 1 in which the cells 13 are of circular configuration.

A reverse surface of the indicator 10 may be united, by means of an adhesive or by welding, to a product.

The polymeric film material may be low density polyethylene. High moisture barrier films, such as silica coated film or polyvinylidene chloride film, are useful to prevent drying of the liquid by evaporation. The material of the envelope may comprise a laminate including a metal foil, such as aluminium, having a window.

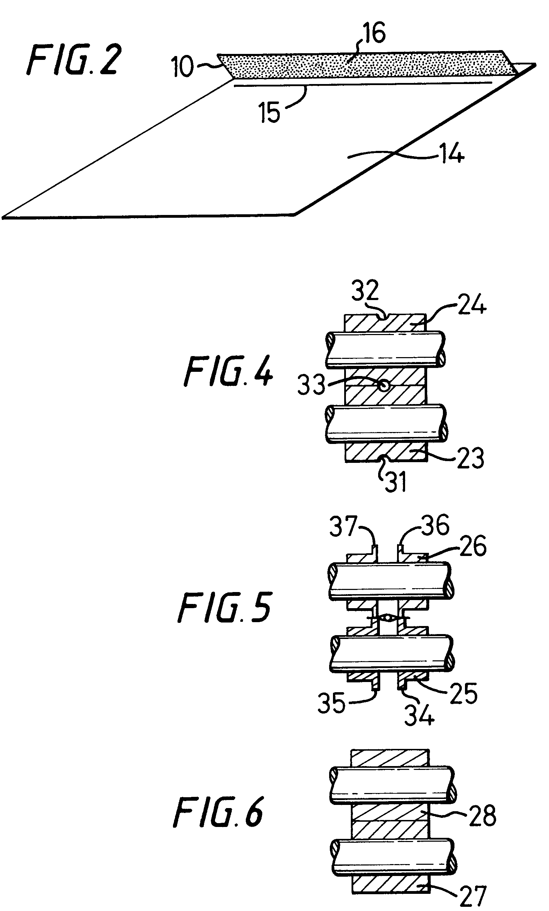

Referring now to Figure 2 of the drawings, there is shown a security package 14 formed of polymeric film material and having an opening 15. The package 14 includes an indicator 10 in the form of a tape which is provided on an outer surface of the layer thereof carrying the reverse printed indicia with an adhesive 16 and along a longitudinal margin thereof is welded to an opposite facing surface containing the opening 15 to provide a flap for covering the opening 15. The adhesive 16 preferably is a high tack adhesive and unites the tape 10 with the opposite surface thereby to close the opening 15 and seal the package 14. A release cover strip may be applied to the adhesive 16 so as to protect the adhesive 16 prior to use of the package 14.

In normal use, indicia reverse printed on the inner surface of the tape 10 would be obscured by the opaque emulsion or, in the example of the liposome composition, the dye would be quenched within the liposomes. If, however, the package 14, or the adhesive 16 were to be subjected to reduced temperature below a predetemined temperature then, in the example of the emulsion, the reduction of temperature would break the emulsion in the cells 13. When, subsequently, the package 14, or the adhesive 16, returns to ambient temperature, phase separation occurs, the emulsion phase particles agglomerating and precipitating to reveal the indicator printed on the reverse surface. In the example of the liposome composition, the reduction of temperature below a predetermined temperature causes the dye to be released from the liposomes, either by permeation through the liposomal membranes or by the lysis of the liposomes, resulting in the dye being diluted by the surrounding liquid medium and the reaction causing the dye to fluoresce.

Referring now to Figures 3 to 6 of the drawings, there is shown apparatus 17 for forming a continuous tape 10, the apparatus comprising a drive unit 18 having a pair of arms 19, 20 secured thereto and each being adapted to have rotatably located thereon a corresponding one of a pair of elongate strips of polymeric film 21, 22. The drive unit 18 also is provided with three pairs of counter rotating rollers 23, 24; 25, 26 and 27, 28 and a pair of cooling rollers 29, 30, each of the rollers 23 to 30 being located outwardly from an outer wall of the drive unit 18 and the four pairs of rollers being arranged in tiers. The rollers 23, 24 are uppermost and are infeed nip rollers each being provided with a circumferential groove 31, 32 arranged such that the grooves 31, 32 combine to form an aperture 33.

The rollers 25, 26 are located below the infeed nip rollers 23, 24 and are each provided with spaced circumferential heated flanges 34, 35 and 36, 37, the flange 34 cooperating with the flange 36 and the flange 35 cooperating with the flange 37.

The rollers 27, 28 are located below the flanged rollers 25, 26 and are heated matrix seal rollers. The circumferential surface of the lower roller 27 is provided with a raised pattern and the circumferential surface of the upper roller 28 is smooth. The matrix seal rollers 27, 28 are located above the cooling rollers 29, 30.

The unit 18 is provided with a lower arm 38 adapted for rotatably supporting a reel 39.

The unit 18 also is provided with a tube 40 which extends through the aperture 33 provided by the nip rollers 23, 24 and between the flanges 34, 35 and 36, 37 of the flanged rollers 25, 26.

The arrangement is such that two rolls 41, 42 of polymeric film 21, 22 are located each on a respective one of the arms 19, 20 and leading edges of the two webs of film 21, 22 are fed in the nip between the nip rollers 23, 24 between the nip of the flanges 34, 36 and 35, 37 of the flange rollers 25, 26 and between the nip of the matrix seal rollers 27, 28. The drive unit 18 is then operated so that drive is transmitted to the rollers 23, 24; 25, 26 and 27, 28 whereby the two films 21, 22 are drawn from the respective rolls 41, 42 downwardly through the nips of the rollers 23, 24; 25, 26 and 27, 28.

While the cooperating films 21, 22 are being drawn downwardly through the nips of the rollers 23, 24; 25, 26 and 27, 28, fluid in the form of an emulsion or a liposomal composition is delivered through the tube 40. The arrangement is such that the flange rollers 25, 26 seal the films 21, 22 one to another continuously in marginal side seals thereby forming the films 21, 22 into a tube 43 containing the fluid and the webs 21, 22 subsequently are welded one to another by the matrix seal rollers 27, 28 so that the tube 43 is formed into a continuous elongate tape 10 comprising a matrix of cells each containing a volume of the fluid. The tape 10 extends arcuately around each of the cooling rollers 29, 30 and subsequently is wound on to the reel 39 to form a roll 44.

The roll 44 subsequently is mounted on a bag making machine and the tape 10 is united with a web of plastics film material for forming into bags prior to passage through the machine whereby the tape 10 is cut in synchronism with the material forming the bags as each bag is formed.

It will be appreciated that the tape 10 may be cut to any convenient shape and may, for example, comprise a label instead of an elongate strip.

It will also be appreciated that the cells 13 may be of different shapes. They may, for example, be of square, diamond or circular configuration creating different aesthetic possibilities.

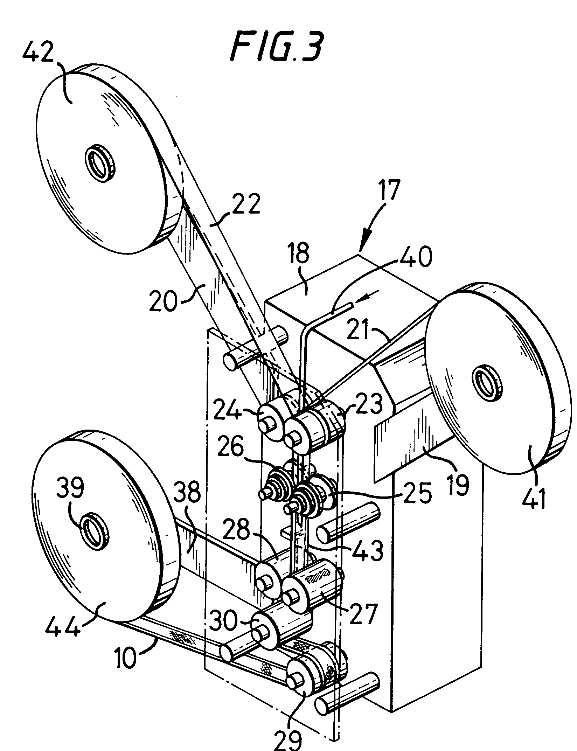

Referring now to Figures 7 and 8 of the drawings, there is shown an indicator 45 comprising an envelope formed of two outer layers of transparent polymeric film material and a third intermediate film between the two outer layers, the intermediate film being in the form of a mesh. The three films are fed through the apparatus shown in Figures 3 to 6 and are thereby welded one to another in marginal seams to provide a tube into which is inserted temperature sensitive material. When the tube passes through the heated matrix rollers 27, 28 the films are welded one to another. In this manner, the temperature sensitive material is confined to cells bounded by the mesh of the intermediate film.

The arrangement is such that a lower of the two outer films is reverse printed with information such as the word THAWED. An upper of the two outer films may be printed with other information such as the words TRIGON SAFETY NET.

In normal conditions, the reverse printed information would be obscured by the opaque temperature sensitive material, as shown in Figure 7 of the drawings. However, if the indicator is subjected to a reduction of temperature below a predetermined value and is subsequently thawed, the temperature sensitive material will change to a clear condition and the reverse printed information will be visible, as shown in Figure 8 of the drawings.

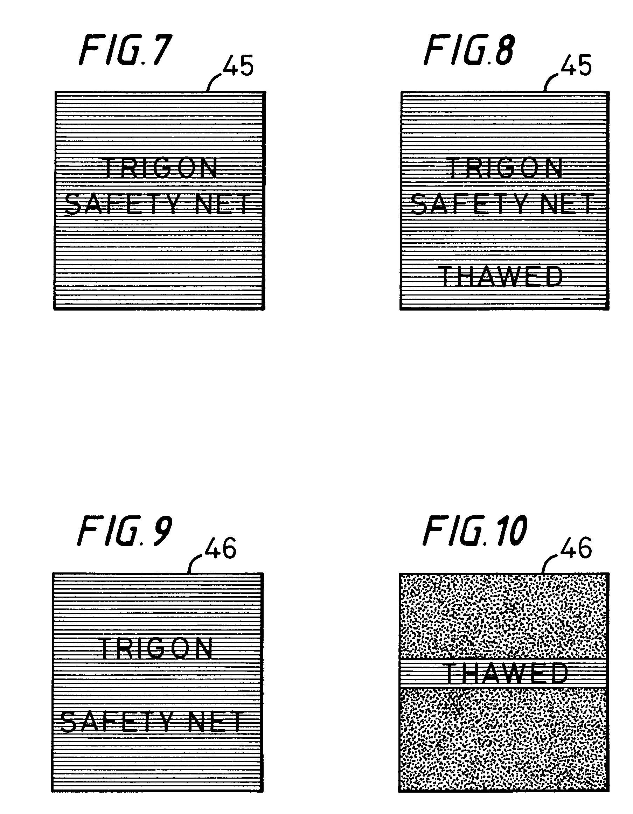

Referring now to Figures 9 and 10 of the drawings, there is shown an indicator 46 which is similar to the indicator 45 shown in Figures 7 and 8 of the drawings except that a lower of the two outer films is reverse printed with a masking colour, except for a central band printed in a bright colour on which is overprinted information such as the word THAWED. An upper of the two outer films is printed with other information such as the words TRIGON SAFETY NET.

In normal conditions, the reverse printed information would be obscured by the opaque temperature sensitive material, as shown in Figure 9 of the drawings. However, if the indicator is subjected to a reduction of temperature below a predetermined value and is subsequently thawed, the temperature sensitive material will change to a clear condition and the masking colour and reverse printed information will be visible. The visibility of the masking colour will have the effect of occluding the information printed on the upper of the two outer films but the reverse printed material overprinted on the bright colour will be visible.

It will be appreciated that, instead of being welded one to another, the films may be laminated by adhesive.

## Claims

1. A temperature sensitive fluid indicator (10) comprising an envelope (11) containing a fluid and the fluid includes a substance the visual characteristics of which change and are visible through the envelope (11) when the fluid is subjected to a change of temperature beyond a predetermined range characterised in that the envelope (11) comprises a plurality of cells (13).

2. An indicator (10) as claimed in Claim 1 characterised in that the envelope (11) comprises an intermediate film located between two outer films, the intermediate film being a mesh.

3. An indicator (10) as Claimed in Claim 1 or Claim 2 characterised in that the envelope comprises at least part of a product (14).

4. An indicator (10) as claimed in Claim 3 characterised in that the envelope (11) is provided with means (16) for uniting the envelope (11) with a surface.

5. An indicator (10) as claimed in Claim 4 characterised in that the said means (16) is an adhesive.

6. An indicator (10) as claimed in Claim 3 characterised in that the envelope (11) comprises a wall of the product.

7. An indicator (10) as claimed in any one of Claims 3 to 6 wherein the product (14) is a security package.

8. An indicator (10) as claimed in any one of the preceding Claims characterised in that the material is a high moisture barrier film.

9. An indicator (10) as claimed in any one of the preceding Claims characterised in that each of the cells (13) is less than 2mm in any dimension.

10. A method of manufacturing fluid indicators (10) comprising the steps of sealing together along marginal edges two strips of polymeric film material thereby to form an envelope (11), inserting a fluid into the envelope (11) and welding opposite facing surfaces of the envelope (11) one to another in a matrix of welds (12) to form a component comprising a plurality of cells (13) containing the fluid.

11. A method as claimed in Claim 10 comprising the step of including with the two strips a third intermediate strip in the form of a mesh.

12. A method as claimed in Claim 11 comprising the further step of winding the component into a reel.

13. A method as claimed in Claim 12 comprising the further step of stamping the component into labels.
